(19) Europäisches Patentamt
European Patent Office
Office européen des brevets

(11) **EP 4 353 341 A1**

(12) **EUROPEAN PATENT APPLICATION**

(43) Date of publication:
**17.04.2024  Bulletin 2024/16**

(21) Application number: **23200508.2**

(22) Date of filing: **28.09.2023**

(51) International Patent Classification (IPC):
***A63F 13/212*** (2014.01)     ***A63F 13/67*** (2014.01)
***A63F 13/843*** (2014.01)     ***A63F 13/847*** (2014.01)

(52) Cooperative Patent Classification (CPC):
**A63F 13/67; A63F 13/212; A63F 13/843;**
**A63F 13/847**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022  GB 202215114**

(71) Applicant: **Sony Interactive Entertainment Inc.
Tokyo 108-0075 (JP)**

(72) Inventors:
• **BARCIAS, Jesus
London, W1F 7LP (GB)**

• **MICHAILIDIS, Lazaros
London, W1F 7LP (GB)**
• **JENABZADEH, Mandana
London, W1F 7LP (GB)**
• **FRIEND, Mark
London, W1F 7LP (GB)**
• **BERNABEI, Daniele
London, W1F 7LP (GB)**
• **MONTI, Maria
London, W1F 7LP (GB)**

(74) Representative: **D Young & Co LLP
3 Noble Street
London EC2V 7BQ (GB)**

(54) **AFFECTIVE GAMING SYSTEM AND METHOD**

(57)     An affective gaming system, comprising: an administrator unit configured to host a session of a video game; a receiving unit configured to receive biometric data associated with two or more users participating in the session of a video game; a first generating unit configured to generate, based on at least part of the biometric data, current emotion data associated with each of the two or more users; a selecting unit configured to select a first user based on at least part of the current emotion data; a second generating unit configured to generate, based at least in part on the current emotion data that is associated with a second user, target emotion data associated with the first user; and a modifying unit configured to modify, responsive to the difference between the target emotion data and the current emotion data that is associated with the first user, one or more aspects of the video game that are specific to the first user.

FIGURE 2

EP 4 353 341 A1

**Description**

<u>Field of Invention</u>

The present invention relates to an affective gaming system and method.

<u>Background</u>

The popularity of multi-player video games has increased in recent years. Such multi-player video games allow users to connect with other users while completing certain achievements or challenges within the video game. For example, in order to complete certain achievements or challenges within a multi-player video game, two or more users may need to co-operate with each other. For example, the two or more users may need to help each other in order to overcome a certain obstacle or defeat a mutual enemy. In other examples, completing certain achievements or challenges may require the two or more users to compete with each other. For example, the two or more users may be split into two or more teams, and the challenge is to obtain more points, kills, goals, etc. than the other team.

While playing a multi-player video game, certain users may not experience the game as it was intended to be experienced (that is, in accordance with the developer's intentions), or may otherwise experience the game in a manner different to that of other users playing the game. This can lead to dissatisfaction with the game, and may even lead to a sense of isolation in certain users; the user may feel that their experience of the game is anomalous in comparison with that of other users, especially in the case where the user is the only one experiencing the game in their particular manner.

The present invention seeks to alleviate or mitigate this issue.

<u>Summary of the Invention</u>

In a first aspect, an affective gaming system is provided in claim 1.

In another aspect, an affective gaming method is provided in claim 14.

Further respective aspects and features of the invention are defined in the appended claims.

Embodiments of the present invention will now be described by way of example with reference to the accompanying drawings, in which:

- Figure 1 schematically illustrates an entertainment system operable as an affective gaming apparatus according to embodiments of the present description;
- Figure 2 schematically illustrates an affective gaming apparatus according to embodiments of the present description;
- Figure 3 schematically illustrates a network environment;
- Figure 4 schematically illustrates a valence and arousal chart;
- Figure 5 schematically illustrates an affective gaming apparatus according to embodiments of the present description;
- Figure 6 schematically illustrates an affective gaming method according to embodiments of the present description; and
- Figure 7 schematically illustrates an affective gaming method according to embodiments of the present description.

<u>Description of the Embodiments</u>

An affective gaming system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, an entertainment system is a non-limiting example of such a harassment detection apparatus.

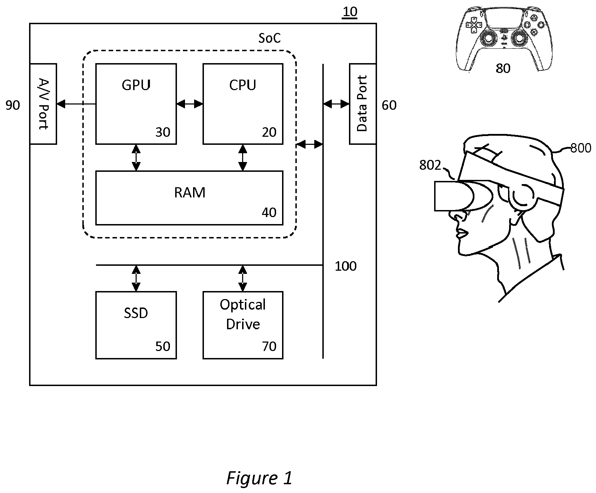

Referring to Figure 1, an example of an entertainment system 10 is a computer or console such as the Sony ® PlayStation 5 ® (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ® port, WiFi ® port, Bluetooth ® port or similar, as appropriate. It may also optionally receive data via an optical drive 70.

Interaction with the system is typically provided using one or more handheld controllers 80, such as the DualSense ® controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

As mentioned previously, certain users of a multiplayer video game may experience the game in a manner different to that which was intended, or different to that of other users also playing the game, which may lead to the user being dissatisfied with their game experience, and even feel a sense of isolation thereby. As a non-limiting example, a certain user playing a multi-player horror game may find that the game is not particularly scary/thrilling for them, whereas the other players of the game may find it terrifying.

This problem can be alleviated or mitigated by implementing means to gather biometric data from users of the multi-player game, and therefrom generate data indicating the emotions of the users. Such means would subsequently determine, using the emotion data, whether a given user is experiencing an emotion that is different to that of the other users, or an unintended emotion, and on this basis modify aspects of the multiplayer video game that are specific to the given user in order to modify their experience of the video game. Turning back to the horror game example, once the certain user has been detected as having a different/unintended experience with the game, the certain user's avatar may have their health reduced (in order to make encounters with scary enemies more "dangerous"), or in-game sound effects may have their volume level increased, the screen brightness lowered, or the like, in order that the certain user's experience of the game resembles that of the other users, or otherwise resemble that which was intended by the game developers.

Two approaches regarding the implementation of these means shall be discussed in the present description. The first approach may be thought of as making a first user feel emotions similar to that of one or more other users, whereas the second approach may be thought of as making the first user feel an emotion which has been determined/calculated by using some form of algorithm. Both approaches are similar in that they modify aspects of the video game that are specific to the first user in order that the first user subsequently feels a "target" emotion (that is, the other users' emotions in the first approach, and the determined emotion in the second approach). It should be noted that the aspects specific to the first user are such that modifications thereof are not perceived by the other users of the video game and/or do not affect the interactions between the first user and the other users during the video game.

Such approaches may be also provide additional advantages such as alleviating or mitigating user discomfort due to, say, vision/hearing fatigue, anxiety, or the like; a user experiencing discomfort will likely exhibit an emotional reaction to such discomfort, the emotional reaction being detectable by way of the biometric data received from the user. The modifications made in response to determining that the user is experiencing discomfort (that is, exhibiting emotions indicative of a reaction to discomfort) may therefore alleviate or mitigate the discomfort; reducing screen brightness may reduce vision fatigue, or reducing in-game music may reduce hearing fatigue, for example.

**The First Approach** - **Using Other Users' Emotions as a "Target" Emotion**

*Affective Gaming Apparatus*

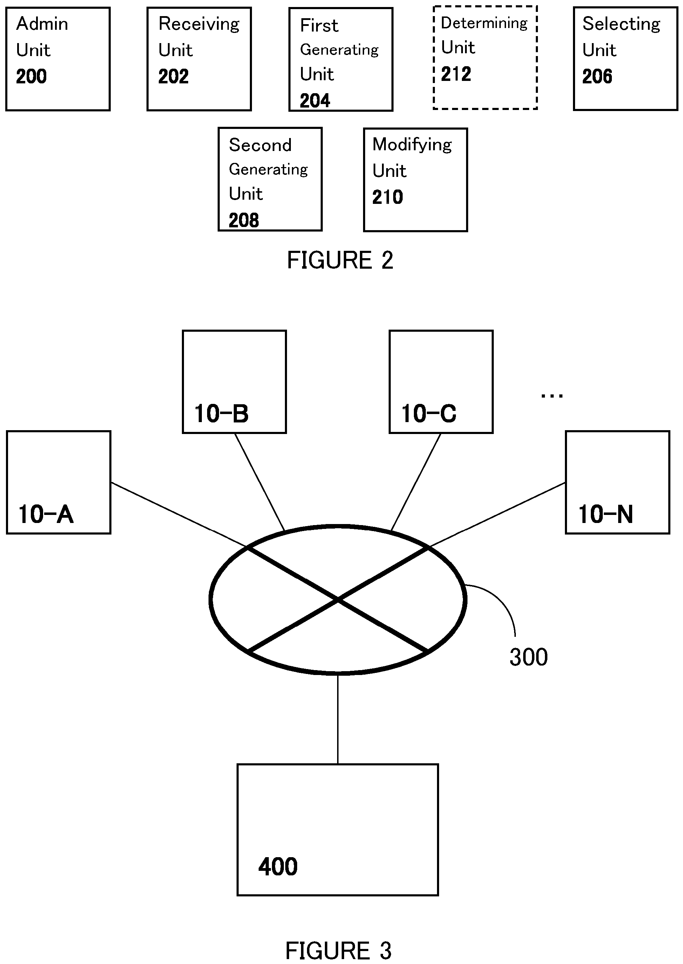

Accordingly, turning now to figure 2, in embodiments of the present description, an affective gaming apparatus comprises administrator unit 200 configured to host a session of a video game; receiving unit 202 configured to receive biometric data associated with two or more users participating in the session of a video game; first generating unit 204 configured to generate, based on at least part of the biometric data, current emotion data associated with each of the two or more users; selecting unit 206 configured to select a first user based on at least part of the current emotion data; second generating unit 208 configured to generate, based at least in part on the current emotion data that is associated with a second user, target emotion data associated with the first user; and modifying unit 210 configured to modify, responsive to the difference between the target emotion data and the current emotion data that is associated with the first user, one or more aspects of the video game that are specific to the first user.

Multi-player video games are typically hosted via a network such as LAN, WLAN, the Internet, P2P networks, or the like. Figure 3 depicts a typical network environment for a multi-player video game, in which game server 400 is connected to a plurality of client devices (entertainment devices) 10-A to 10-N via network 300. It should be noted that client devices need not only take the form of an entertainment device (such as a PS5), but may also include telephones, computers, televisions, or any other device capable of connecting to a network.

Therefore, and as will be appreciated by persons skilled in the art, the affective gaming system may potentially be implemented by any device (or combination of devices) involved in the generation or administration of the multi-player video game, such as the entertainment device 10 (whether in a P2P structure, or operating as either a client or server, either as a real or virtualised device), or a dedicated server for example provided by the publishers of the video game.

As a non-limiting example of the affective gaming system in operation, consider a session of a multi-player video game in which a plurality of users are participating. During the game session, biometric data (such as heart rate, breathing rate, galvanic skin response, facial images, or the like) is obtained from the plurality of users. This is may be achieved by using, say, microphones, cameras, fitness tracking devices, mobile telephones, or the like, that are configured to communicate with entertainment device (games console) 10 via wired or wireless communication methods such as Bluetooth ®, USB, WiFi ®, or the like. The biometric data is received at receiving unit 202, and first generating unit 204 subsequently generates current emotion data (valence and/or arousal values, for example, as described later herein) for each user therefrom. Alternatively or in addition, similarly controller 80 or HMD 802 may comprise biometric sensors such as one or more skin galvanic conduction sensors, or more or more cameras and/or microphones.

During gameplay, user A may start to experience emotions which were not intended by the game developers, or are not similar to those being experienced by the other users (not finding a horror game scary, for example). As such, user A's biometric data may change (heart rate reduces, breathing rates reduces, for example), leading to a change in user A's current emotion data. Selecting unit 206 may select user A based on the their current emotion data; user A's current emotion data may satisfy one or more selection criteria, or their emotion data is found to be a statistical outlier in a group of users' emotion data, for example.

In response to the selection of user A, second generating unit 208 may generate target emotion data for user A, which, in essence, indicates an emotion that is desired for user A to experience. This target emotion data is at least in part based on the current emotion data of another user playing the video game; user B. User B would most likely be a user that has not been selected by selecting unit 206. Alternatively put, user B's current emotion data indicates that user B is experiencing emotions that were intended by the game developers, or are similar to those being experienced by the other users (finding the horror game scary, for example). As noted elsewhere herein, the current emotion data of 'user B' may in fact be an average of a plurality of other users, for example up to all users in the game other than user A, or all other users in the same team as user A.

Subsequently, modifying unit 210 may modify one or more aspects of the multi-player video game that are specific to user A's gaming experience. Such modifications would be responsive to the difference between user A's target and current emotion data; a large difference may involve a greater extent of modification, such as a greater number of aspects being modified and/or a greater extent to which a given aspect is modified, for example. A few examples of user-specific aspects of multi-player video games have been mentioned previously (screen brightness, for example), but shall be discussed in greater detail later herein.

The modifications to the video game seek to change user A's experience of the game, preferably in a manner which results in user A feeling the intended/typical emotions associated with the video game, thereby reducing user dissatisfaction and isolation during gameplay. Moreover, the modifications may also alleviate or mitigate user discomfort and/or dissatisfaction, as mentioned previously.

*Video Games*

In embodiments of the present description, administrator unit 200 is configured to host a session of a video game. In embodiments of the present description, administrator unit 200 may be one or more CPUs (such as CPU 20, for example) and/or one or more GPUs (such as GPU 30, for example). The video game being hosted on administrator unit 200 may be any type/genre of multi-player video game.

*Biometric Data*

In embodiments of the description, it is desirable to ascertain whether a given user participating in the video game is experiencing emotions which are different from those intended, or from those exhibited by the other users.

Therefore, in embodiments of the present description, receiving unit 202 is configured to receive biometric data associated with two or more users participating in the session of a video game. In embodiments of the present description, receiving unit 202 may be one or more data ports, such as data port 60, USB ports, Ethernet ® ports, WiFi ® ports, Bluetooth ® ports, or the like.

The biometric data obtained from the users during the game session may provide an indication of each users' emotional state. This is because the human body typically exhibits a physiological response to emotions. In the context of playing a video game, these emotions may arise from stimuli output from the video game and/or sources of user discomfort; in some cases, the stimuli may be causing the discomfort (current screen brightness may cause vision fatigue, for example). For example, when experiencing fear, the human body typically responds by increasing heart rate, increasing breathing rate, sweating, and the like. The biometric data gathered from users during the game session may comprise information regarding at least some aspects of their respective physiological responses to (parts of) the video game, which in turn may provide an indication of the emotional state of the user (subject to further processing discussed later herein).

Hence, more generally, biometric data may be thought of as data indicative of a given user's physiological response to (parts of) the video game.

The biometric data may comprise one or more of:

i. a galvanic skin response (changes in sweat gland activity and/or skin conductance);
ii. a heart rate;
iii. a breathing rate;
iv. a blink rate;
v. a metabolic rate;
vi. video data (one or more images of a given user's face and/or body);
vii. audio data (speech or other noises made by a given user); and
viii. one or more input signals (button presses from a given user's game controller).

It should be noted that the preceding examples are not exhaustive; persons skilled in the art will appreciate that types of biometric data other than those mentioned previously are considered within the scope of the present description.

The biometric data may be received from one or more of:

i. a fitness tracking device;
ii. a user input device (game controller, mouse, keyboard, or the like)
iii. a camera (standalone or comprised within a computer, head mounted display, TV, user input device, or the like); and
iv. a microphone (standalone or comprised within a computer, head mounted display, TV, user input device, or the like).

It should be noted that the preceding examples are not exhaustive; persons skilled in the art will appreciate that types of devices operable to obtain and transmit a given user's biometric data other than those mentioned previously are considered within the scope of the present description.

*Current Emotion Data*

In order to ascertain the current emotional state of a given user, the gathered biometric data may be used to generate the given user's current emotion data. This current emotion data may come in the form of valence and/or arousal values, which, in essence, respectively indicate the (un)pleasantness and/or the intensity of the emotion currently being experienced by the given user. However, other alternative or additional forms of current emotion data may be apparent to persons skilled in the art, yet it must be based on (that is, derived from) at least part of the gathered biometric data.

Therefore, in embodiments of the present description, first generating unit 204 is configured to generate, based on at least part of the biometric data, current emotion data associated with each of the two or more users. In embodiments of the present description, first generating unit 204 may be one or more CPUs (such as CPU 20, for example) and/or one or more GPUs (such as GPU 30, for example).

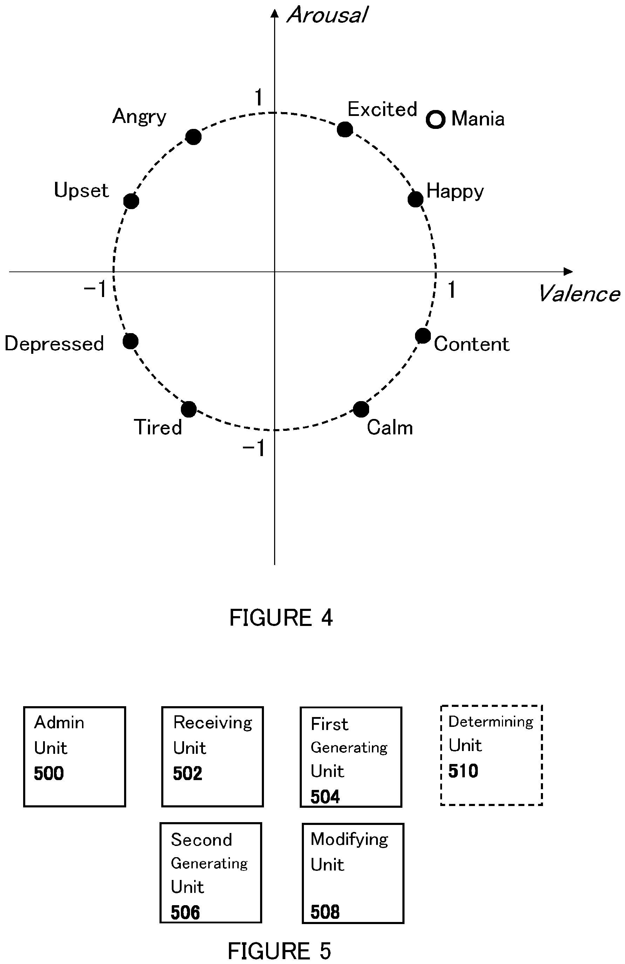

The current emotion data may provide an indication of a given user's current emotional state during gameplay. This may be especially so in the case where the emotion data comprises valence and arousal values for the given user, as such values may be treated as a pair of coordinates to be plotted on a graph similar to that depicted in figure 4.

Figure 4 depicts a valence and arousal chart onto which valence and arousal values associated with certain emotions have been plotted. Valence, v, and arousal, *a*, values are typically non-dimensional (that is, unitless) numbers within the range of $-1 \leq v, a \leq 1$. The values 1 and -1 therefore represent the extremes of (un)pleasantness and intensity of emotion. Interestingly, the valence and arousal values of commonly experienced emotions (such as those plotted with a black dot, •) typically follow the circumference of a circle (see dashed line) that is centred at the origin (which may represent an emotional state of ambivalence or indifference, for example) and has a circumference of 1. This is not necessarily true for all emotional states; certain rare (or less commonly experienced) emotional states, such as a very intense elation ('mania', plotted with a ring, ∘) experienced by some people during a manic episode, for example, may not fit this trend. However, given that this trend is typically followed by the more commonly experienced emotions, it may be beneficial to utilise this trend in the generation of current emotion data. It should be noted that not all commonly experienced emotions are depicted in figure 4; persons skilled in the art will appreciate that other common emotions exist and may be plotted in similar manner to those depicted in figure 4.

First generating unit 204 may generate current emotion data from a given user's biometric data by implementing some form of predetermined algorithm (an equation, for example) which may take into account the different types of biometric data received from the given user. Certain types of biometric data may be more strongly correlated with valence than arousal, and *vice versa.* Therefore, those types of biometric data that are more correlated with valence (such as, video data and audio data, for example) may be used to determine the valence value, and likewise those biometric data types that are more correlated with arousal (such as galvanic skin response and heart rate, for example) may be used to determine the arousal value. Some types of biometric data may be correlated with both valence and arousal. For example, breathing rate may be positively correlated with arousal and negatively correlated with valence, which would result in the user's emotion data indicating calmness when the breathing rate is low, and an upset emotion when the breathing rate is high. The same could be said of a frequency of repeated input signals; a user may repeatedly press a button of a game controller while they experience anxiety, but not do so when they are calm.

It should be noted that the aforementioned correlations may only hold true in certain situations. People typically adopt a sitting positon when playing video games. As such, the aforementioned correlations may hold true in these circumstances. However, if a certain user is, say, moving while playing the game (for example, playing a virtual reality video game which utilises the given user's bodily motions, or the like), the aforementioned correlations may not hold true; the increased breathing rate of that certain user could not be relied upon as an indication that the user is scared due to a horror game. As such, and as will be appreciated by persons skilled in the art, other correlations would need to be devised which take into account the circumstances in which a given user is playing the video game. Similarly also certain biometric data may correlate differently for different user demographics, including gender and age; for example younger players may change heart rate more rapidly, and/or by a greater amount than older players in response to the same stimulus and emotional response. Hence more generally the algorithm may optionally be specific to or calibrated for a given user, a particular environment or class of environment, and/or for particular levels or activities or classes thereof within the environment (e.g. being different during a death match game and during a matchmaking lobby where teams for the game are picked).

For the purposes of illustration only, the aforementioned correlations will be used in a non-limiting example of algorithmic current emotion data generation. Equations 1 and 2 are example equations which may be used to calculate (generate) current emotion data (valence and arousal values) from biometric data.

$$v = Q_v(c_1F + c_2A + c_3B + c_4I - D_1) \qquad\qquad \text{Equation 1}$$

$$a = Q_a(c_5S + c_6H + c_7B + c_8I - D_2) \qquad\qquad \text{Equation 2}$$

$Q_v$ and $Q_a$ are scaling factors which ensure that the respective values of valence, *v*, and arousal, *a* lie in the range $-1 \leq v$, $a \leq 1$ (or at least ensure that the order of magnitude of *v* and *a* is 1). $c_1$ to $c_8$ are weighting coefficients for each type of biometric data, which may take on a positive or a negative value depending on the correlation between the respective type of biometric data and the valence/arousal value. F and A are quantities determined by respectively performing face detection on the video data and audio analysis on the audio data. For example, F may be the degree of curvature of the user's lips (indicating smiling or frowning), the degree of inclination of the eyebrows (indicating anger or surprise), or the like, and A may be an average pitch of the user's voice (higher pitch may indicate sadness), a quantity representing a timbre (tone colour) of the user's voice (whimpering has a timbre similar to that of a *falsetto* voice, whereas a normal voice is more full and resonant in sound), or the like. B is the breathing rate, *I* is the frequency of repeated input signals, S is skin conductance and H is heart rate. $D_1$ and $D_2$ are threshold (datum) values which the quantities $c_1F + c_2A + c_3B + c_4I$ and $c_5S + c_6H + c_7B + c_8I$ must respectively surpass so that *v* and *a* may be greater than zero (in the case, that the given user may be happy or excited, for example).

It should be noted that equations 1 and 2 (and any other equation which may be devised in order to generate current emotion data from biometric data) may be tailored to the data available for each of the plurality of users. For example, where a given user does not provide breathing rate data, then equations 1 and 2 may be modified to discount or remove variables B, $c_3$ and $c_7$, and adjust (most likely reduce) the values of $D_1$ and $D_2$.

As previously mentioned, the valence and arousal values of commonly experienced emotions typically follow the circumference of a circle when plotted on a valence and arousal chart, the circle being centred at the origin and having a circumference of 1. This circle may therefore be expressed in equation 3 as:

$$v^2 + a^2 = 1 \qquad\qquad \text{Equation 3}$$

This trend may be used in order to correct any errors which may arise when generating current emotion data. For example, for a portion of biometric data, equation 1 may yield a valence value of 0.8, whereas equation 2 may yield an arousal value of 2.5 (which is erroneous as arousal values may only be between -1 and 1). This may be corrected by utilising equation 3 and the valence value of 0.8. Doing so yields an arousal value of ± 0.36. Given that the erroneous arousal value was greater than zero, a corrected arousal value may be selected as 0.36.

Alternatively or in addition to using equations/algorithms, machine learning models may be used in order to generate current emotion data from biometric data. This may be advantageous in that qualitative aspects of biometric data may be taken into account when generating the (typically quantitative) current emotion data. These qualitative aspects may be the meaning (semantics) of the words spoken by a user during gameplay (such words may be recognised using known speech recognition techniques), the cadence of a user's speech (which may not necessarily be qualitative, but the complex time-dependent nature of speech cadence may prove difficult to accurately take into account when using the aforementioned equations), determining the types of sounds uttered by the user (sobbing, screaming, whimpering, or the like), determining emotions from facial expressions, or the like. The use of machine learning models shall be discussed later herein.

In any case, the generated current emotion data may be used determine which user of the multi-player video game are experiencing emotions which are different from those intended, or from those exhibited by the other users.

*User Selection*

In embodiments of the present description, selecting unit 206 is configured to select a first user based on at least part of the current emotion data. In embodiments of the present description, selecting unit 206 may be one or more CPUs (such as CPU 20, for example) and/or one or more GPUs (such as GPU 30, for example).

As will be appreciated by persons skilled in the art, selecting unit 206 may therefore select a user that is experiencing unintended/atypical emotions during gameplay by considering the current emotion data of that user (optionally with respect to the other users' current emotion data). As will be appreciated by persons skilled in the art, more than one of the users may be selected as first users.

Such user selection may be carried out by way of using criteria; should a given user's current emotion data satisfy one or more of these criteria, then they may be selected as a first user by selecting unit 206. It should be noted that a given criterion may (or may not) be specific to a particular video game, a particular genre of video game, a particular level of the video game. Moreover, a given criterion may be immutable or dynamically adjustable, and may have been predefined or user-defined.

Turning back to the horror game example, appropriate criteria for selecting users experiencing unintended/atypical emotions may correspond to valence and/or arousal values which are not typically associated with fear, for example. Thus, a given user may be selected as the first user by selecting unit 206 when their current emotion data satisfies such "not scared" criteria. Hence more generally, selecting unit 206 may be configured to select the first user based at least in part on the current emotion data that is associated with the first user satisfying one or more selection criteria.

Alternatively or in addition, embodiments of the present description may comprise determining unit 212, which may be configured to determine an expected range of values that the current emotion data that is associated with a given user is expected to fall within. Determining unit 212 may be one or more CPUs (such as CPU 20, for example) and/or one or more GPUs (such as GPU 30, for example). Where embodiments of the present description comprise determining unit 212, then selecting unit 206 may be configured to select the first user if the current emotion data that is associated with the first user does not fall within the expected range of values.

This expected range of values may, for example, comprise an expected range of valence values and/or an expected range of arousal values. However, other alternative or additional forms of expected ranges of values may be devised by persons skilled in the art, which take into account other forms of current emotion data. It should be noted that the expected range of values may (or may not) be specific to a particular video game, a particular genre of video game, or a particular level of the video game. Moreover, the expected range of values may be immutable or dynamically adjustable.

Optionally, determining unit 212 may be configured to determine the expected range of values based on a predetermined range of values. This predetermined range of values may be, say, a range of values that was defined by the video game's developers during development of the video game, for example. Thus, an expected range of values determined in this way may represent the emotions that the developer's intended for the users to experience during gameplay, for example.

Alternatively or in addition, determining unit 212 may be configured to determine the expected range of values based on at least one of a genre of the video game and an in-game context of the video game. In order to do so, determining unit 212 may be configured to determine at least one of the genre of the video game and an in-game context of the video game. For example, determining unit 212 may determine the genre of the video game based on the video game's data and/or metadata (the video game's title, the age rating associated with the video game, or the like). An in-game context may be thought of as an in-game situation within which a given user is currently involved, such as a particular level of the video game, or even a particular part of a video game level. Examples include a boss battle, a zombie horde approaching the user's avatar, the opposition team having possession of the football, or the like. Determining unit 212 may be configured to determine the in-game context based on game state data indicating a current state of the video game. Such game state data may comprise the users' respective avatar locations and/or orientations, game objects'/characters' respective locations and/or orientations, the weapons/objects that characters/avatars possess, or any other information which indicates the state of the video game (in-game situation) within which a given user is currently involved. Thus, the expected range of values determined in this way may represent the emotions that a given user should be feeling in light of the genre and/or in-context of the video game.

Alternatively or in addition, if biometric data associated with more than two users is received by receiving unit 202, determining unit 212 may be configured to determine the expected range of values by performing a statistical analysis on the current emotion data. In order to do so, determining unit 212 may employ any of the mathematical/statistical techniques that are known by persons skilled in the art. Interestingly, by performing such statistical analysis on the current emotion data, determining unit 212 may itself be able to determine which of the users should be selected as a first user, and may even provide such information to selecting unit 206 in order to make the selection quicker/more efficient, for example. For example, during such a statistical analysis, the current emotion data of one or more users may be deemed to be statistical outliers. As such, the users with whom the outlying current emotion data is associated may be considered to be users that are experiencing emotions that are different from those typically experienced by users of the video game; their current emotion data, being a statistical outlier, does not fall within the expected range of values determined by determining unit 212. These users may be identified by determining unit 212 by virtue of their outlying current emotion data, and identification data identifying these users may be output to selection unit 206, which may subsequently select these users as first users based on the identification data. Advantageously, this approach avoids the need to predefine an expected emotion; thus it may simplify assessment for games where the game state is potentially complex in terms of combinations of possible factors, is defined procedurally, is physics based, and/or is primarily a function of multiplayer interactions.

Hence more generally, determining unit 212 may be configured to determine one or more statistical outliers within the current emotion data, where a given statistical outlier may be current emotion data that is associated with a given user, identify one or more users associated with the statistical outliers, and generate identification data that identifies the one or more users associated with the statistical outliers. Moreover, selecting unit 206 may be configured to select one or more first users from the plurality of users based on the identification information. As will be appreciated by persons skilled in the art, the statistical analysis carried out by determining unit 212 may therefore be thought of as a *de facto* selection of first users.

Alternatively or in addition, machine learning models may be used in order to determine the expected range of values. This may be advantageous in that qualitative aspects of the video game may be taken into account when generating the (typically quantitative) expected range of values. These qualitative aspects may be associated with the state of the video game (in-game situation) within which a given user is currently involved, such as the scenery (the types/appearance of virtual objects the scene, the colours of the scene, the sounds of the scene, or the like), movements/body language of users' avatars, movements/body language of non-player characters, and the like, for example. The use of machine learning models shall be discussed later herein.

As will be appreciated by persons skilled in the art, the expected range of values, once determined, may be utilised for user selection; a user whose current emotion data does not fall within this expected range of values may be selected as a first user by selecting unit 206.

In any case, target emotion data may be generated for the first user once the first user has been selected by selecting unit 206.

*Target Emotion data*

Once the first user has been selected by selecting unit 206, it is desirable to modify aspects of the video game that are specific to the first user, and thereby change the emotions experienced by the first user during gameplay. In order to ascertain the extent to which the video game should be modified for the first user, it may be beneficial to determine a target emotion for the first user, that is, an emotion that would be desired for the user to experience during gameplay. As mentioned previously, the present description outlines two approaches to determining a target emotion for the selected user. In this first approach, the current emotion data that is associated with at least a second user (which is different from the first user) is used as basis for target emotion generation. The second user is preferably a user that is currently experiencing emotions that were intended by the game developers, or are similar to those being experienced by the other users (or indeed may be aggregated from two or more other users, as described elsewhere herein).

Therefore, in embodiments of the present description, second generating unit 208 may be configured to generate, based at least in part on the current emotion data that is associated with a second user, target emotion data associated with the first user. In embodiments of the present description, second generating unit 208 may be one or more CPUs (such as CPU 20, for example) and/or one or more GPUs (such as GPU 30, for example).

The target emotion data may provide an indication of an emotional state that would be desired for the first user to experience during gameplay. The target emotion data may come in the form of valence and/or arousal values. However, other alternative or additional forms of current emotion data may be devised by persons skilled in the art, yet it must be based on (that is, derived from) the current emotion data that is associated with a second user.

As mentioned previously, the second user is likely to be a user that has not been selected by selecting unit 206. Alternatively put, the second user's current emotion data indicates that the second user is currently experiencing emotions that were intended by the game developers, or are similar to those being experienced by the other users, or for example a majority thereof, or any other suitable indicator of consensus (most players finding the horror game scary, for example). As such, it may be beneficial to utilise user selection methods that are complementary to those discussed with respect to selecting the first user in order to select the second user. As will be appreciated by persons skilled in the art, more than one of the users that have not been selected as a first user may be selected as second users.

Such second user selection may be carried out by using selection criteria. Turning back to the horror game example, appropriate criteria for selecting users experiencing intended/typical emotions may correspond to valence and/or arousal values which are typically associated with fear, for example. Thus, a given user may be selected as a second user by selecting unit 206 when their current emotion data satisfies such "scared" criteria. Hence more generally, selecting unit 206 may be configured to select the second user based at least in part on the current emotion data that is associated with the second user satisfying one or more other selection criteria.

Alternatively or in addition, where embodiments of present description comprise determining unit 212, second user selection may be carried out by selecting the second user if their current emotion data falls within the expected range of values, the expected range of values being determined in accordance with any combination of the techniques discussed hereinbefore. Hence more generally, where embodiments of the present description comprise determining unit 212, then selecting unit 206 may be configured to select the second user if the current emotion data that is associated with the second user falls within the expected range of values.

In any case, second generating unit 208 may generate the first user's target emotion data based on the second user's (or users') current emotion data.

For example, second generating unit 208 may be configured to generate target emotion data that corresponds to the current emotion data that is associated with the second user; the generated target emotion data may be equal to that of the second user's current emotion data, or may fall within a threshold difference from the second user's current emotion data, for example.

Alternatively, the second generating unit 208 may be configured to generate target emotion data that corresponds to an average of the current emotion data that is associated with the first user and the current emotion data that is associated with the second user; the generated target emotion data may be an unweighted average of the first and second user's current emotion data, or may be some form of weighted average, for example. Regarding the latter, the weighting coefficients may be predetermined, user-defined, dynamically adjustable during gameplay, or the like.

Alternatively, if biometric data associated with more than two users is received by receiving unit 202, second generating unit 208 may be configured to generate target emotion data that corresponds to an average of the current emotion data that is associated with the second user and the current emotion data that is associated with one or more other users; the generated target emotion data may be any type of average (weighted or unweighted) of the second and other users' current emotion data, for example. It is preferable that the one or more other users are themselves one or more second users, that is to say, users experiencing the intended/typical emotions during gameplay.

Where embodiments of the present description comprise determining unit 212, the expected range of values determined by determining unit 212 may be used for the dynamic adjustment of weighting coefficients (should weighted averages be used). For example, the weighting coefficients currently associated with the first and second users' respective current emotion data may be such that the resulting target emotion data may still fall outside of the expected range of values (which the current emotion data that is associated with a given user is expected to fall within). Determining unit 212 may therefore be configured to adjust the weighting coefficients for a weighted average based on the expected range of values.

Alternatively or in addition, machine learning models may be used in order to generate target emotion data. This may be advantageous in that a more effective determination of weighting coefficients may be carried out (should weighted averages be used), for example. For example, the machine learning model may be trained to take into account qualitative aspects associated with the state of the video game (in-game situation) within which a given user is currently involved when generating the (typically quantitative) weighting coefficients (scenery, movements/body language of avatars and/or non-player characters, or the like). The use of machine learning models shall be discussed later herein.

In any case, second generating unit 208 may generate target emotion data for the first user, which may then be used to ascertain the extent to which the first user's gameplay should be modified.

*Video Game Aspects*

In embodiments of the present description, it is desirable to modify aspects of the video game that are specific to the first user, and thereby change the emotions experienced by the first user during gameplay. As mentioned previously, the target emotion data may provide an indication of an emotional state that would be desired for the first user to experience during gameplay, whereas current emotion data may provide an indication of the first user's current emotional state during gameplay. As will be appreciated by persons skilled in the art, the difference between the target and current emotion data for the first user may therefore be thought of as providing an indication as to the extent to which the video game should be modified for the first user in order that the first user's emotional state may be changed to that indicated by the target emotion data (at least approximately).

Therefore, in embodiments of the present description, modifying unit 210 is configured to modify, responsive to the difference between the target emotion data and the current emotion data that is associated with the first user, one or more aspects of the video game that are specific to the first user. In embodiments of the present description, modifying unit 210 may be one or more CPUs (such as CPU 20, for example) and/or one or more GPUs (such as GPU 30, for example).

As mentioned previously, a large difference between target and current emotion data may involve a greater extent of modification, such as a greater number of aspects being modified and/or a greater extent to which a given aspect is modified, for example. Hence more generally, the number of aspects of the video game that are specific to the first user to be modified and/or the extent to which said aspects are modified may be responsive to the difference between the target emotion data and the current emotion data that is associated with the first user.

The rationale behind the modification of aspects which are specific to the first user (characteristics of the first user's avatar, first user's display/audio settings, or the like) - as opposed to modifying aspects which affect multiple users (characteristics of non-player characters, goals scored/enemies killed by a team, or the like) - is that user-specific modifications, by definition, can only affect the first user's experience of the video game. This is beneficial as such modifications ensure that no other user's gameplay is impacted by the modifications made to the video game, which could have led to other users' experiencing unintended/atypical emotions during gameplay otherwise (frustration due to the first user being able to move faster, for example), or other unintended consequences of modified game play. Moreover, modifying video game aspects that are applicable to multiple users runs the risk of reducing user comfort; increasing the amount of non-player characters in a virtual town may cause nausea in some of the other users due to the increased amount of motion visible on a given other user's screen, for example.

Such modifications may affect aspects of the game specific to the user, such as their own characters health, or may purely relate to emotional cues specific to the user, such as music or lighting provided for them.

One of the aspects of the video game that is specific to the first user (or indeed an aspect that is specific to a given user of the video game) may be a characteristic of a virtual avatar associated with the first user, the characteristic being such that does not impact the mechanics of interactions between the first user and a given other user, and/or does not impact the mechanics of interactions between the first user and non-player character. Therefore, and as will be appreciated by persons skilled in the art, characteristics such as the size, shape, speed, or the like, of the first user's avatar should ideally not be modified. However, characteristics such as the first user's avatar's health level (or other avatar statistics) may be modified, thereby making damaging blows dealt by a given other user's avatar (or a non-player character) more likely to result in the first user's avatar being fatally wounded, for example. As will be appreciated by person skilled in the art, modifying such avatar statistics does not impact the mechanics of the interactions involving the first user (the damaging blow dealt may be performed in the usual manner by the avatar/non-player character), but rather impacts the state of the first user's avatar subsequent to the interaction (suffering a fatal wounding). Optionally, modifications that can change in-game stats such as health or damage taken may be excluded for the techniques herein, or if included may optionally be disabled, for example by a setting associated with a multiplayer instance of a game.

One of the aspects of the video game that is specific to the first user may be a characteristic of a virtual environment of the video game, the characteristic being such that does not impact the mechanics of interactions between a given other user's avatar and the virtual environment. Therefore, and as will be appreciated by persons skilled in the art, characteristics such as the terrain topology, size and/or shape of buildings/infrastructure/foliage/other scenery objects, or the like, should ideally not be modified. However, characteristics such as the colour, texture, shading, or other cosmetic aspects of (parts of) the virtual environment may be modified only for the first user, such user-specific virtual environment modifications being carried out by using any techniques known to persons skilled in the art. Alternatively, aspects of the scenery that do not have a material effect on the game (e.g. foliage that players can run through, as opposed to walls or doors that can halt progress or provide protection) may be removed specifically from the view rendered for the first user, for example if they find overcrowded scenes stressful). More generally, alternative graphics and/or sounds for a given object or environmental element can be provided for the first user only without affecting overall game play, where this would assist with altering the first user's emotion, or similarly such objects can be removed/not shown for the first user only where they do not affect the mechanics of interactions between a given other user's avatar and the virtual environment.

One of the aspects of the video that is specific to the first user may be a characteristic of a virtual object comprised within the video game, the characteristic being such that does not impact the mechanics of interactions between a given other user's avatar and the virtual object. Therefore, and as will be appreciated by persons skilled in the art, characteristics such as damage/range of a weapon, speed of a vehicle, or the like, should ideally not be modified. However, modifications similar to those discussed with respect to the virtual environment (such as to its appearance for the first user) may be carried out.

One of the aspects of the video that is specific to the first user may be an in-game audio setting for adjusting audio output by an entertainment device of the first user. For example, adjusting the volume/equalisation/mixing of in-game sound effects and/or music.

One of the aspects of the video that is specific to the first user may be an in-game display setting for adjusting video output by the entertainment device of the first user. For example, brightness, colour palette (grayscale, sepia, or the like), backlighting, contrast, resolution, or motion blur applied to virtual objects/avatars/characters.

As will be appreciated by persons skilled in the art, any one of the aforementioned user-specific video game aspects (and indeed any combination thereof) may be modified by modifying unit 210. Moreover, it should be noted that the preceding examples are not exhaustive; persons skilled in the art will appreciate that user-specific video game aspects other than those mentioned previously are considered within the scope of the present description.

Optionally, an iterative approach to modifying the user-specific aspects of the video game may be adopted. Such an iterative modification may be beneficial in that the first user's current emotion data may be continually monitored to ensure that the changes in the first user's emotions tend towards the intended/typical emotion associated with (part of) the video game.

Therefore, in embodiments of the present description, modifying unit 210 may be configured to iteratively modify at least one of the aspects of the video game that are specific to the first user, wherein: for a given iteration, the modifying unit is configured to: evaluate whether the difference between the target emotion data and the current emotion data that is associated with the first user meets or exceeds a threshold difference, and if so modify, responsive to the difference between the target emotion data and the current emotion data that is associated with the first user, a given one or more of the aspects of the video game that are specific to the first user, or else cease from modifying aspects of the video game that are specific to the first user.

As will be appreciated by persons skilled in the art, the threshold difference here may be thought of as a convergence criteria the satisfaction of which terminates (ceases) the iterative modification process.

In any case, the modifications made by modifying unit 210 serve to change the first user's emotions to (approximately) those which were intended by the game developers, or those being experienced by the other users of the video game. Moreover, the modifications may also alleviate or mitigate user discomfort and/or dissatisfaction, as mentioned previously.

*Machine learning models*

As mentioned elsewhere herein, machine learning models may be implemented in embodiments of the present description, the advantages of doing so having been discussed hereinbefore.

In embodiments of the present description, at least one of first generating unit 204 and second generating unit 208 may comprise one or more trained generating models, wherein a given trained generating model comprised within first generating unit 204 is trained to generate the current emotion data, and a given trained generating model comprised within second generating unit 208 is trained to generate the target emotion data.

A trained generating model comprised within first generating unit 204 may be trained using biometric data received during one or more previously hosted sessions of the video game (or indeed that of any other video game), for example. Moreover, current emotion data that was generated during the previously hosted sessions using any of the techniques discussed hereinbefore may be used. The generating model may therefore learn relationships between the biometric data and the current emotion data.

A trained generating model comprised within second generating unit 208 may similarly be trained using expected ranges of values determined during previously hosted video game sessions (should determining unit 212 be used) and the target emotion data generated during said previous sessions. The generating model may therefore learn relationships between the expected range of values and the target emotion data such that a more accurate determination of weighting coefficient may be carried out (should weighted averaged be used).

Alternatively or in addition, where embodiments of the present description comprise determining unit 212, determining unit 212 may comprise one or more trained determining models that are trained to determine the expected range of values. The trained determining models may be trained using video data and/or audio data output from the video game (or indeed that output by any other video game), for example. Such outputted video and/or audio data may comprise qualitative information (bodily motions of characters/avatars, in-game sounds, or the like) that could be taken into account when determining the expected range of values (which may or may not involve the determination of an in-game context beforehand). The outputted video and/or audio data may be labelled with the appropriate in-game context so that the determining model may learn the relationships between video and/or audio data and the in-game context/expected range of values.

As will be appreciated by persons skilled in the art, the generating models and/or the determining models may be any type of machine learning model, neural network, or deep learning algorithm. Moreover, it will be appreciated that, as noted previously, different criteria and/or expected ranges of values may apply to different games or activities within a game, and hence similarly respective generating models may be trained or cloned and re-trained and used, for different games and/or different activities within a game.

**The Second Approach - Determining a "Target" Emotion**

Turning now to figure 5, in embodiments of the present description, an affective gaming system comprises administrator unit 500 configured to host a session of a video game; receiving unit 502 configured to receive biometric data associated with a first user of a plurality of users participating in the session of a video game; first generating unit 504 configured to generate, based on at least part of the biometric data, current emotion data associated with the first user; second generating unit 506 configured to generate, based at least in part on the current emotion data associated with the first user, target emotion data associated with the first user; and modifying unit 508 configured to modify, responsive to the difference between the target emotion data associated with the first user and the current emotion data associated with the first user, one or more aspects of the video game that are specific to the first user.

Similarly with the first approach, the affective gaming apparatus may potentially be implemented by any device (or combination of devices) involved in the generation or administration of the multi-player video game, such as the entertainment device 10 (whether in a P2P structure, or operating as either a client or server, either as a real or virtualised device), or a dedicated server for example provided by the publishers of the video game.

Whereas the first approach considered the current emotion data of other users in order to generate the target emotion data, the second approach determines the target emotion data by way of calculation/the implementation of some form of algorithm. For example, whereas the first approach involved obtaining biometric data from a plurality of users, and generating current emotion data for each user therefrom, the second approach only requires biometric data from one of the plurality of users (but may optionally receive other users' biometric data) and generates current emotion data for that one user (and optionally other users).

As such, the selecting unit of the first approach is not required for the second approach. Rather, second generating unit 506 may generate the target emotion data for that one user (the first user) based on that one users' current emotion data. For example, second generating unit 506 may generate the first users' target emotion data when their current emotion data satisfies one or more criteria, or their emotion data is found to be a statistical outlier in a group of users' emotion data (should other users' biometric data be received by receiving unit 502), for example.

Similarly with the first approach, modifying unit 506 may modify one or more aspects of the multi-player video game that are specific to the first user's gaming experience, such aspects having been discussed in detail hereinbefore. Similarly with the first approach, such modifications would be responsive to the difference between the first user's target and current emotion data.

The modifications to the video game seek to change the first user's experience of the game, preferably in a manner which results in the first user feeling the intended/typical emotions associated with the video game, thereby reducing user dissatisfaction and isolation during gameplay. Moreover, the modifications may also alleviate or mitigate user discomfort and/or dissatisfaction, as mentioned previously.

*Video Games, Biometric Data and Current Emotion Data*

In embodiments of the present description, administrator unit 500 is configured to host a session of a video game, receiving unit 502 is configured to receive biometric data associated with a first user of a plurality of users participating in the session of a video game, and first generating unit 504 is configured to generate, based on at least part of the biometric data, current emotion data associated with the first user. In embodiments of the present description, administrator unit 500, receiving unit 502 and first generating unit 504 may respectively be one or more CPUs (such as CPU 20, for example) and/or one or more GPUs (such as GPU 30, for example).

As will be appreciated by persons skilled in the art, administrator unit 500, receiving unit 502 and first generating unit 504 may be considered analogous to administrator unit 200, receiving unit 202, and first generating unit 204 in form and purpose, albeit that the biometric data and current emotion data is associated with one of the plurality of users, rather than each of the plurality of users. Thus, the prior discussion regarding administrator unit 200, receiving unit 202, and first generating unit 204 may be applied, *mutatis mutandis*, to administrator unit 500, receiving unit 502 and first generating unit 504.

Optionally, receiving unit 502 may be configured to receive biometric data associated with two or more other users of the plurality of users, the two or more other users being different from the first user, and first generating unit 504 may be configured to generate, based on at least part of the biometric data associated with the two or more other users, current emotion data associated with each of the two or more other users. As will be appreciated by persons skilled in the art, this has essentially been discussed previously with respect to receiving unit 202 and first generating unit 204. The advantages of configuring receiving unit 502 and first generating unit 504 in such a manner shall be discussed later herein.

*Target Emotion Data*

In embodiments of the present description, second generating unit 506 is configured to generate, based at least in part on the current emotion data associated with the first user, target emotion data associated with the first user. In embodiments of the present description, second generating unit 506 may be one or more CPUs (such as CPU 20, for example) and/or one or more GPUs (such as GPU 30, for example).

As will be appreciated by persons skilled in the art, second generating unit 506 may be considered analogous to second generating unit 208, albeit that the generation of target emotion data is based at least in part on the first user's current emotion data, rather than a second user's.

Second generating unit 506 may generate the first user's target emotion data in response to the first user's current emotion data satisfying one or more criteria. Similarly with the user selection criteria discussed hereinbefore, it should be noted that a given criterion may (or may not) be specific to a particular video game, a particular genre of video game, a particular level of the video game. Moreover, a given criterion may be immutable or dynamically adjustable, and may have been predefined or user-defined.

Turning back to the horror game example, appropriate criteria for generating the first user's target emotion data may correspond to valence and/or arousal values which are not typically associated with fear, for example. Thus, second generating unit 506 may generate the first user's target emotion data when their current emotion data satisfies such "not scared" criteria. Hence more generally, second generating unit 506 may be configured to generate target emotion data associated with the first user based at least in part on the current emotion data that is associated with the first user satisfying one or more generation criteria.

Alternatively or in addition, embodiments of the present description may comprise determining unit 510, which may be configured to determine an expected range of values that the current emotion data associated with a given user is expected to fall within. Determining unit 510 may be one or more CPUs (such as CPU 20, for example) and/or one or more GPUs (such as GPU 30, for example). Where embodiments of the present description comprise determining unit 510, then second generating unit 506 may be configured to select the first user if the current emotion data associated with the first user does not fall within the expected range of values.

Thus, as will be appreciated by persons skilled in the art, generating target emotion data based at least in part on the current emotion data associated with the first user may be taken to mean that the generation of target emotion data is responsive to the current emotion data associated with the first user satisfying one or more generation criteria (or, should determining unit 510 be used, falling within the expected range of values).

As will be appreciated by persons skilled in the art, determining unit 510 may be considered analogous to determining unit 212 in form and purpose. Thus, the prior discussion regarding determining unit 212 may be applied, *mutatis mutandis*, to determining unit 510.

Thus, as will be appreciated by persons skilled in the art, in embodiments where receiving unit 502 is configured to receive biometric data associated with two or more other users of the plurality of users, and first generating unit 504 is configured based on at least part of the biometric data associated with the two or more other users, current emotion data associated with each of the two or more other users, determining unit 510 may be configured to determine the expected range of values by performing a statistical analysis on the current emotion data.

As a corollary, should the first user's current emotion data be found by determining unit 510 to be a statistical outlier, then such a finding may trigger the generation of target emotion data, as the statistical outlier would, by definition, lie outside of the expected range of values determined by determining unit 510. Hence more generally, second generating unit 506 may be configured to generate the target emotion data associated with the first user in response to the determination that the current emotion data associated with the first user corresponds to a statistical outlier.

Optionally, the second generating unit 506 may be configured to generate the target emotion data associated with the first user based on the expected range of values. Given that the expected range of values may represent the emotions that a given user should be feeling in light of the genre and/or in-context of the video game, and/or represent the emotions that the developer's intended for the users to experience during gameplay, it would be desirable to take such an expected range of values into account when generating the target emotion data. For example, the target emotion data may fall within the expected range of values.

As will be appreciated by persons skilled in the art, the expected range of values, once determined, may be utilised for target emotion generation; should the first user's current emotion data fall outside this expected range of values, then second generating unit 506 may generate the first user's target emotion data.

In any case, second generating unit 510 may generate target emotion data for the first user, which may then be used to ascertain the extent to which the first user's gameplay should be modified.

*Video Game Aspects*

In embodiments of the present description, modifying unit 508 is configured to modify, responsive to the difference between the target emotion data associated with the first user and the current emotion data associated with the first user, one or more aspects of the video game that are specific to the first user. In embodiments of the present description, modifying unit 508 may be one or more CPUs (such as CPU 20, for example) and/or one or more GPUs (such as GPU 30, for example).

As will be appreciated by persons skilled in the art, modifying unit 508 may be considered analogous to modifying unit 210 in form and purpose. Thus, the prior discussion regarding modifying unit 210 may be applied, *mutatis mutandis*, to modifying unit 508.

Thus, as will be appreciated by person skilled in the art, modifying unit 508 may be configured to iteratively modify at least one of the aspects of the video game that are specific to the given first user, wherein: for a given iteration, the modifying unit is configured to: evaluate whether the difference between the target emotion data associated with the first user and the current emotion data associated with the first user meets or exceeds a threshold difference, and if so modify, responsive to the difference between the target emotion data associated with the first user and the current emotion data associated with the first user, a given one or more of the aspects of the video game that are specific to the first user, or else cease from modifying aspects of the video game that are specific to the first user.

*Machine Learning Models*

As will be appreciated by persons skilled in the art, machine learning models may be used in order to generate current emotion data from biometric data, determine the expected range of values (where embodiments comprise determining unit 510), and/or generate the target emotion data.

Therefore, in embodiments of the present description, at least one of the first generating unit and the second generating unit may comprise one or more trained generating models, wherein a given trained generating model comprised within the first generating unit is trained to generate the current emotion data, and a given trained generating model comprised within the second generating unit is trained to generate the target emotion data. Alternatively or in addition, where embodiments of the present description comprise determining unit 510, determining unit 510 may comprise one or more trained determining models that are trained to determine the expected range of values.

As will be appreciated by persons skilled in the art, the prior discussion regarding machine learning models may be applied here, *mutatis mutandis*; rather than second generating unit 506 using a generating model in order to determine appropriate weighting coefficients for weighted averages, second generating unit 506 may generate the appropriate target emotion data outright. For example, second generating unit 506 may generate the appropriate valence and arousal values *per se* as the target emotion data, with or without reference to an expected range of values.

*Summary Embodiment(s)*

Hence, in a summary embodiment of the present description an affective gaming system comprises: administrator unit 200 configured to host a session of a video game; receiving unit 202 configured to receive biometric data associated with two or more users participating in the session of a video game; first generating unit 204 configured to generate, based on at least part of the biometric data, current emotion data associated with each of the two or more users; selecting unit 206 configured to select a first user based on at least part of the current emotion data; second generating unit 208 configured to generate, based at least in part on the current emotion data that is associated with a second user, target emotion data associated with the first user; and modifying unit 210 configured to modify, responsive to the difference between the target emotion data and the current emotion data that is associated with the first user, one or more aspects of the video game that are specific to the first user, as described elsewhere herein.

It will be apparent to persons skilled in the art that variations in the aforementioned apparatus as described and claimed herein are considered within the scope of the present invention, including but not limited to that:

- In an instance of the summary embodiment, second generating unit 208 is configured to generate target emotion data that corresponds to the current emotion data that is associated with the second user, as described elsewhere herein;

- In an instance of the summary embodiment, second generating unit 208 is configured to generate target emotion data that corresponds to an average of the current emotion data that is associated with the first user and the current emotion data that is associated with the second user, as described elsewhere herein;
- In an instance of the summary embodiment, if biometric data associated with more than two users is received by receiving unit 202, second generating unit 208 is configured to generate target emotion data that corresponds to an average of the current emotion data that is associated with the second user and the current emotion data that is associated with one or more other users, as described elsewhere herein;
- In an instance of the summary embodiment, the affective gaming system comprises determining unit 212 configured to determine an expected range of values that the current emotion data that is associated with a given user is expected to fall within, wherein selecting unit 206 is configured to select the first user if the current emotion data that is associated with the first user does not fall within the expected range of values, as described elsewhere herein;

  - In this instance, optionally determining unit 212 is configured to determine the expected range of values based on a predetermined range of values, as described elsewhere herein;
  - Similarly in this instance, optionally determining unit 212 is configured to determine the expected range of values based on at least one of a genre of the video game and an in-game context of the video game, as described elsewhere herein;
  - Similarly in this instance, if biometric data associated with more than two users is received by the receiving unit, optionally determining unit 212 is configured to determine the expected range of values by performing a statistical analysis on the current emotion data, as described elsewhere herein;
  - Similarly in this instance, optionally determining unit 212 comprises one or more trained determining models that are trained to determine the expected range of values, as described elsewhere herein;

- In an instance of the summary embodiment, at least one of first generating unit 204 and second generating unit 208 comprise one or more trained generating models, wherein a given trained generating model comprised within first generating unit 204 is trained to generate the current emotion data, and a given trained generating model comprised within second generating unit 208 is trained to generate the target emotion data, as described elsewhere herein;
- In an instance of the summary embodiment, modifying unit 210 is configured to iteratively modify at least one of the aspects of the video game that are specific to the first user, wherein: for a given iteration, the modifying unit is configured to: evaluate whether the difference between the target emotion data and the current emotion data that is associated with the first user meets or exceeds a threshold difference, and if so modify, responsive to the difference between the target emotion data and the current emotion data that is associated with the first user, a given one or more of the aspects of the video game that are specific to the first user, or else cease from modifying aspects of the video game that are specific to the first user, as described elsewhere herein;
- In an instance of the summary embodiment, the biometric data comprises one or more selected from the list consisting of:

    i. a galvanic skin response;
    ii. a heart rate;
    iii. a breathing rate;
    iv. a blink rate;
    v. a metabolic rate;
    vi. video data;
    vii. audio data; and
    viii. one or more input signals,

    as described elsewhere herein; and
- In an instance of the summary embodiment, the biometric data is received from one or more selected from the list consisting of:

    i. a fitness tracking device;
    ii. a user input device;
    iii. a camera; and
    iv. a microphone,

    as described elsewhere herein.

Alternatively, in a summary embodiment of the present description an affective gaming system comprises: administrator unit 500 configured to host a session of a video game; receiving unit 502 configured to receive biometric data associated with a first user of a plurality of users participating in the session of a video game; first generating unit 504 configured to generate, based on at least part of the biometric data, current emotion data associated with the first user; second generating unit 506 configured to generate, based at least in part on the current emotion data associated with the first user, target emotion data associated with the first user; and modifying unit 508 configured to modify, responsive to the difference between the target emotion data associated with the first user and the current emotion data associated with the first user, one or more aspects of the video game that are specific to the first user, as described elsewhere herein.

It will be apparent to persons skilled in the art that variations in the aforementioned apparatus as described and claimed herein are considered within the scope of the present invention, including but not limited to that:

- In an instance of the summary embodiment, the affective gaming system comprises determining unit 510 configured to determine an expected range of values that the current emotion data associated with the first user is expected to fall within, wherein second generating unit 506 is configured to generate the target emotion data associated with the first user when the current emotion data associated with the first user does not fall within the expected range of values, as described elsewhere herein;

  - In this instance, optionally determining unit 510 is configured to determine the expected range of values based on a predetermined range of values, as described elsewhere herein;
  - Similarly in this instance, optionally determining unit 510 is configured to determine the expected range of values based on at least one of a genre of the video game and an in-game context of the video game, as described elsewhere herein;
  - Similarly in this instance, optionally receiving unit 502 is configured to receive biometric data associated with two or more other users of the plurality of users, the two or more other users being different from the first user; first generating unit 504 is configured to generate, based on at least part of the biometric data associated with the two or more other users, current emotion data associated with each of the two or more other users; and determining unit 510 is configured to determine the expected range of values by performing a statistical analysis on the current emotion data, as described elsewhere herein;
  - Similarly in this instance, optionally second generating unit 506 is configured to generate the target emotion data associated with the first user based on the expected range of values, as described elsewhere herein;
  - Similarly in this instance, optionally determining unit 510 comprises one or more trained determining models that are trained to determine the expected range of values, as described elsewhere herein;

- In an instance of the summary embodiment, at least one of first generating unit 504 and second generating unit 506 comprise one or more trained generating models, wherein a given trained generating model comprised within first generating unit 504 is trained to generate the current emotion data, and a given trained generating model comprised within second generating unit 506 is trained to generate the target emotion data, as described elsewhere herein;
- In an instance of the summary embodiment, wherein the modifying unit is configured to iteratively modify at least one of the aspects of the video game that are specific to the first user, wherein: for a given iteration, the modifying unit is configured to: evaluate whether the difference between the target emotion data associated with the first user and the current emotion data associated with the first user meets or exceeds a threshold difference, and if so modify, responsive to the difference between the target emotion data associated with the first user and the current emotion data associated with the first user, a given one or more of the aspects of the video game that are specific to the first user, or else cease from modifying aspects of the video game that are specific to the first user, as described elsewhere herein;
- In an instance of the summary embodiment, the biometric data comprises one or more selected from the list consisting of:

    i. a galvanic skin response;
    ii. a heart rate;
    iii. a breathing rate;
    iv. a blink rate;
    v. a metabolic rate;
    vi. video data;
    vii. audio data; and
    viii. one or more input signals,

as described elsewhere herein; and

- In an instance of the summary embodiment, the biometric data is received from one or more selected from the list consisting of:

    i. a fitness tracking device;
    ii. a user input device;
    iii. a camera; and
    v. a microphone,

as described elsewhere herein.

*Affective Gaming Method(s)*

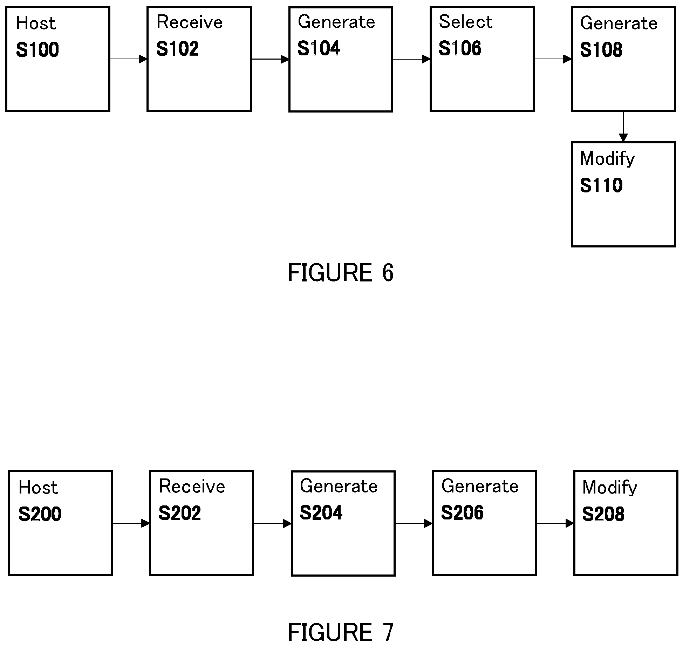

Turning now to figure 6, an affective gaming method comprises the following steps:

Step S100: hosting a session of a video game, as described elsewhere herein.

Step S102: receiving biometric data associated with two or more users participating in the session of a video game, as described elsewhere herein.

Step S104: generating, based on at least part of the biometric data, current emotion data associated with each of the two or more users, as described elsewhere herein.

Step S106: selecting a first user based on at least part of the current emotion data, as described elsewhere herein.

Step S108: generating, based at least in part on the current emotion data that is associated with a second user, target emotion data associated with the first user, as described elsewhere herein.

Step S 110: modifying, responsive to the difference between the target emotion data and the current emotion data that is associated with the first user, one or more aspects of the video game that are specific to the first user, as described elsewhere herein.

Turning now to figure 7, an affective gaming method comprises the following steps:

Step S200: hosting a session of a video game, as described elsewhere herein.

Step S202: receiving biometric data associated with a first user of a plurality of users participating in the session of a video game, as described elsewhere herein.

Step 204: generating, based on at least part of the biometric data, current emotion data associated with the first user, as described elsewhere herein.

Step 206: generating, based at least in part on the current emotion data associated with the first user, target emotion data associated with the first user, as described elsewhere herein.

Step 208: modifying, responsive to the difference between the target emotion data associated with the first user and the current emotion data associated with the first user, one or more aspects of the video game that are specific to the first user, as described elsewhere herein.

It will be apparent to a person skilled in the art that variations in the above methods corresponding to operation of the various embodiments of the apparatuses as described and claimed herein are considered within the scope of the present invention.

It will be appreciated that the above methods may be carried out on conventional hardware (such as entertainment device 10) suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

**Claims**

1. An affective gaming system, comprising:

   an administrator unit configured to host a session of a video game;
   a receiving unit configured to receive biometric data associated with two or more users participating in the session of a video game;
   a first generating unit configured to generate, based on at least part of the biometric data, current emotion data associated with each of the two or more users;
   a selecting unit configured to select a first user based on at least part of the current emotion data;
   a second generating unit configured to generate, based at least in part on the current emotion data that is associated with a second user, target emotion data associated with the first user; and
   a modifying unit configured to modify, responsive to the difference between the target emotion data and the current emotion data that is associated with the first user, one or more aspects of the video game that are specific to the first user.

2. An affective gaming system according to claim 1, wherein the second generating unit is configured to generate target emotion data that corresponds to the current emotion data that is associated with the second user.

3. An affective gaming system according to claim 1, wherein the second generating unit is configured to generate target emotion data that corresponds to an average of the current emotion data that is associated with the first user and the current emotion data that is associated with the second user.

4. An affective gaming system according to claim 1, wherein if biometric data associated with more than two users is received by the receiving unit, the second generating unit is configured to generate target emotion data that corresponds to an average of the current emotion data that is associated with the second user and the current emotion data that is associated with one or more other users.

5. An affective gaming system according to any preceding claim, comprising:

   a determining unit configured to determine an expected range of values that the current emotion data that is associated with a given user is expected to fall within,
   wherein the selecting unit is configured to select the first user if the current emotion data that is associated with the first user does not fall within the expected range of values.

6. An affective gaming system according to claim 5, wherein the determining unit is configured to determine the expected range of values based on a predetermined range of values.

7. An affective gaming system according to claim 5 or claim 6, wherein the determining unit is configured to determine the expected range of values based on at least one of a genre of the video game and an in-game context of the video game.

8. An affective gaming system according to any one of claims 5 to 7, wherein if biometric data associated with more than two users is received by the receiving unit, the determining unit is configured to determine the expected range of values by performing a statistical analysis on the current emotion data.

9. An affective gaming system according to any one of claims 5 to 8, wherein the determining unit comprises one or more trained determining models that are trained to determine the expected range of values.

10. An affective gaming system according to any preceding claim, wherein at least one of the first generating unit and the second generating unit comprise one or more trained generating models,
wherein a given trained generating model comprised within the first generating unit is trained to generate the current emotion data, and a given trained generating model comprised within the second generating unit is trained to generate the target emotion data.

11. An affective gaming system according to any preceding claim, wherein the modifying unit is configured to iteratively modify at least one of the aspects of the video game that are specific to the first user, wherein:

for a given iteration,
the modifying unit is configured to:

evaluate whether the difference between the target emotion data and the current emotion data that is associated with the first user meets or exceeds a threshold difference, and if so
modify, responsive to the difference between the target emotion data and the current emotion data that is associated with the first user, a given one or more of the aspects of the video game that are specific to the first user, or else
cease from modifying aspects of the video game that are specific to the first user.

12. An affective gaming system according to any preceding claim, wherein the biometric data comprises one or more selected from the list consisting of:

i. a galvanic skin response;
ii. a heart rate;
iii. a breathing rate;
iv. a blink rate;
v. a metabolic rate;
vi. video data;
vii. audio data; and
viii. one or more input signals.

13. An affective gaming system according to any preceding claim, wherein the biometric data is received from one or more selected from the list consisting of:

i. a fitness tracking device;
ii. a user input device;
iii. a camera; and
iv. a microphone.

14. An affective gaming method, comprising:

hosting a session of a video game;
receiving biometric data associated with two or more users participating in the session of a video game;
generating, based on at least part of the biometric data, current emotion data associated with each of the two or more users;
selecting a first user based on at least part of the current emotion data;
generating, based at least in part on the current emotion data that is associated with a second user, target emotion data associated with the first user; and
modifying, responsive to the difference between the target emotion data and the current emotion data that is associated with the first user, one or more aspects of the video game that are specific to the first user.

15. A computer program comprising computer executable instructions adapted to cause a computer system to perform the method of claim 14.

Figure 1

| Admin Unit **200** | Receiving Unit **202** | First Generating Unit **204** | Determining Unit **212** | Selecting Unit **206** |

| Second Generating Unit **208** | Modifying Unit **210** |

## FIGURE 2

## FIGURE 3

FIGURE 4

FIGURE 5

| Host S100 | → | Receive S102 | → | Generate S104 | → | Select S106 | → | Generate S108 |

Modify S110

FIGURE 6

| Host S200 | → | Receive S202 | → | Generate S204 | → | Generate S206 | → | Modify S208 |

FIGURE 7

Europäisches
Patentamt

European
Patent Office

Office européen
des brevets

# EUROPEAN SEARCH REPORT

Application Number

EP 23 20 0508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/129855 A1 (AMBINDER MICHAEL S [US] ET AL) 30 April 2020 (2020-04-30) <br> * paragraph [0023] – paragraph [0027] * <br> * paragraph [0034] – paragraph [0038] * <br> * paragraph [0043] – paragraph [0053] * <br> * paragraph [0084] – paragraph [0085] * <br> * paragraph [0097] – paragraph [0098] * <br> * paragraph [0153] * <br> * paragraph [0160] – paragraph [0162] * <br> ----- | 1-15 | INV. <br> A63F13/212 <br> A63F13/67 <br> A63F13/843 <br> A63F13/847 |
| A | US 2019/355209 A1 (SOREY TYLER [US] ET AL) 21 November 2019 (2019-11-21) <br> * paragraph [0004] – paragraph [0005] * <br> * paragraph [0016] – paragraph [0017] * <br> * paragraph [0050] – paragraph [0054] * <br> * paragraph [0071] – paragraph [0089] * <br> ----- | 1-15 | |
| X | US 2020/206631 A1 (SUMANT CHINMAY MUKUND [US] ET AL) 2 July 2020 (2020-07-02) <br> * paragraph [0005] – paragraph [0007] * <br> * paragraph [0025] – paragraph [0028] * <br> * paragraph [0034] – paragraph [0035] * <br> * paragraph [0038] – paragraph [0039] * <br> * paragraph [0055] – paragraph [0057] * <br> * paragraph [0104] – paragraph [0105] * <br> ----- | 1-15 | TECHNICAL FIELDS SEARCHED (IPC) <br><br> A63F |
| X | US 2009/270170 A1 (PATTON STEPHEN [US]) 29 October 2009 (2009-10-29) <br> * paragraph [0013] – paragraph [0016] * <br> * paragraph [0028] * <br> * paragraph [0030] * <br> * paragraph [0039] – paragraph [0040] * <br> * paragraph [0052] * <br> * paragraph [0060] – paragraph [0061] * <br> * paragraph [0132] – paragraph [0141] * <br> ----- | 1-15 | |

-/--

The present search report has been drawn up for all claims

| Place of search | Date of completion of the search | Examiner |
|---|---|---|
| The Hague | 27 February 2024 | García Larrodé, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 20 0508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/219085 A1 (MATULA TERRY LANE [US] ET AL) 14 July 2022 (2022-07-14) <br> * paragraph [0018] * <br> * paragraph [0020] * <br> * paragraph [0022] * <br> * paragraph [0044] – paragraph [0057] * <br> ----- | 1-15 | |
| X | US 2014/324749 A1 (PETERS ALEXANDER [CA] ET AL) 30 October 2014 (2014-10-30) <br> * paragraph [0010] – paragraph [0025] * <br> * paragraph [0066] * <br> * paragraph [0073] * <br> * paragraph [0157] * <br> ----- | 1-15 | |

TECHNICAL FIELDS
SEARCHED (IPC)

The present search report has been drawn up for all claims

| Place of search | Date of completion of the search | Examiner |
|---|---|---|
| The Hague | 27 February 2024 | García Larrodé, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 0508

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2024

| Patent document cited in search report | | Publication date | Patent family member(s) | | Publication date |
|---|---|---|---|---|---|
| US 2020129855 | A1 | 30-04-2020 | US 2020129855 A1 | | 30-04-2020 |
| | | | US 2022168634 A1 | | 02-06-2022 |
| US 2019355209 | A1 | 21-11-2019 | AU 2019203135 A1 | | 05-12-2019 |
| | | | US 2019355209 A1 | | 21-11-2019 |
| US 2020206631 | A1 | 02-07-2020 | CN 111375196 A | | 07-07-2020 |
| | | | KR 20200081171 A | | 07-07-2020 |
| | | | US 2020206631 A1 | | 02-07-2020 |
| US 2009270170 | A1 | 29-10-2009 | AU 2009243112 A1 | | 05-11-2009 |
| | | | CN 102076387 A | | 25-05-2011 |
| | | | US 2009270170 A1 | | 29-10-2009 |
| | | | WO 2009134909 A2 | | 05-11-2009 |
| US 2022219085 | A1 | 14-07-2022 | NONE | | |
| US 2014324749 | A1 | 30-10-2014 | NONE | | |

EPO FORM P0459

For more details about this annex : see Official Journal of the European Patent Office, No. 12/82